# FASCICULE DE BREVET EUROPEEN

(11) **EP 0 706 879 B1**
(45) Date de publication et mention de la délivrance du brevet: **11.03.1998**
(21) Numéro de dépôt: 95402030.1
(22) Date de dépôt: 07.09.1995
(51) Int. Cl.: B32B 27/20

(54) **Conditionnement thermoplastique bicouche, son procédé de fabrication**
Zweischichtige Kunststoffverpackung und Verfahren zu ihrer Herstellung
Two layered thermoplastic package and method of making it

(30) Priorité: 13.10.1994 FR 9412234
(43) Date de publication de la demande: 17.04.1996
(73) Titulaire: L'OREAL, 75008 Paris (FR)
(72) Inventeur: Gueret, Jean-Louis, F-75018 Paris (FR)
(74) Mandataire: Lhoste, Catherine

(56) Documents cités:
- EP-A- 0 204 324
- EP-A- 0 438 339
- BE-A- 676 891
- GB-A- 1 096 064
- GB-A- 1 408 981
- DATABASE WPI Section Ch, Week 9208 Derwent Publications Ltd., London, GB; Class A32, AN 92-060075 & JP-A-04 004 147 ( SHOWA DENKO KK) , 8 Janvier 1992

## Description

La présente invention se rapporte à un récipient en matière thermoplastique constitué d'au moins une couche interne et d'une couche externe, destiné notamment à contenir des compositions cosmétiques ou dermatologiques. Ce récipient permet en particulier de préserver le contenu des radiations lumineuses, de l'oxydation tout en présentant un aspect esthétique satisfaisant.

Ce récipient peut se présenter sous la forme d'un flacon, d'un pot, d'une bouteille.

Plus précisément, la couche externe comprend au moins une charge en vue de conférer cet aspect esthétique.

L'invention se rapporte également à un procédé de fabrication de ce récipient.

La demande de brevet EP-A-0 204 324 divulgue une plaquette multicouche dont la couche externe en matière thermoplastique comprend une charge inorganique. Cependant, cette charge doit être de granulométrie très faible et ne permet pas d'obtenir un aspect esthétique satisfaisant.

La demande de brevet FR-A-2 657 048 enseigne un procédé de fabrication de conditionnements ayant un aspect extérieur pierre naturelle et dont la paroi est constituée d'une matrice thermoplastique monocouche qui comporte au moins deux charges de granulométrie ou tailles différentes.

Ces récipients en matière thermoplastique sont obtenus au moyen de procédés de mise en forme connus du type moulage par injection.

Malheureusement les charges ne sont pas toujours réparties de façon homogène dans la matrice et, ne sont pas toujours présentes en quantité suffisante pour conférer un aspect pierre satisfaisant. En effet, une trop grande quantité de charge dans la matière entraîne une diminution de l'élasticité du matériau et peut provoquer l'apparition de trous et/ou de fissures dans la paroi du récipient. Ceci aboutit à une porosité accrue de la paroi vis-à-vis de l'air ou vis-à-vis du contenu du récipient, pouvant éventuellement entraîner une dégradation de la composition du contenu.

De même, la présence de particules de diamètre important, notamment supérieur à l'épaisseur de la paroi peut provoquer des trous et/ou des fissures. Or pour conférer un aspect pierre convenable, il est nécessaire d'utiliser une grande quantité de charge, ayant une granulométrie élevée et variée.

D'autres techniques de mise en forme de matériaux plastiques, telles que la coextrusion ou la coextrusion/soufflage sont connues pour des matières plastiques non chargées. Ces techniques consistent à extruder simultanément plusieurs matières plastiques dans une même filière. Elles permettent d'obtenir des pièces dont les différentes matières constituant les parois interne et externe ne se mélangent pas et restent distribuées de façon régulière. Ces techniques présentent l'avantage de pouvoir utiliser deux matériaux différents pour les parois interne et externe du récipient.

Cette technique est notamment décrite dans le document US-A-4 292 355 pour la fabrication d'un conteneur en matière plastique, constitué seulement d'une couche de polypropylène et d'une couche de polymère butadiène-styrène. Malheureusement, ce choix de matériaux ne permet pas l'ajout de charges dans les matériaux constituant la couche externe.

Aussi, il subsiste le besoin d'un récipient en matériau thermoplastique, hermétique à l'air et à son contenu, sans fissures, comportant au moins une paroi interne et une paroi externe, dont la couche externe comporte au moins une charge, et ayant un aspect pierre.

La demanderesse a découvert de façon surprenante qu'il était possible de fabriquer par coextrusion/soufflage un récipient bicouche hermétique dont la couche externe contient une grande quantité de charge, de granulométrie élevée et variée, et ayant un aspect pierre.

Aussi, l'invention a pour objet un récipient en matière thermoplastique obtenu par coextrusion soufflage, comprenant au moins une couche interne et une couche externe, la couche externe comprenant au moins une charge contenant des particules lamellaires et/ou des particules fibreuses orientables,de granulométrie variable et de plus grande dimension supérieure à 50 µm.

L'invention a aussi pour objet un procédé de fabrication d'un récipient en matière thermoplastique obtenu par coextrusion d'au moins deux couches, consistant à coextruder une couche interne thermoplastique et une couche externe contenant au moins une charge contenant des particules lamellaires et/ou des particules fibreuses, de granulométrie variable et de plus grande dimension supérieure à 50 µm, puis à souffler les deux couches de façon que les particules de ladite charge dans la couche externe s'orientent parallèlement à la couche interne.

Ce procédé permet bien l'obtention de récipients sans fissure, à couche externe à particules de diamètre supérieur à 50 µm, contrairement au procédé décrit dans le document FR-A-2 657 048.

Selon l'invention, il est possible d'utiliser une ou plusieurs couches internes associées à une ou plusieurs couches externes dont l'une au moins est chargée.De façon préférée, les particules de la charge ont un diamètre allant de 50 µm à 3 mm et de préférence allant de 80 µm à 1,5 mm, et plus particulièrement de 150 µm à 600 µm.

Le récipient selon l'invention peut utiliser des charges constituées de particules lamellaires sans crainte de fissure ou de trou dans la paroi. En effet, les particules lamellaires, une fois en contact avec la couche interne, du fait du soufflage s'orientent parallèlement à celle-ci selon leur longueur.

La couche interne coextrudée sert de maintien au matériau chargé constituant la paroi interne, pendant le soufflage de ce matériau chargé, assurant ainsi l'orientation appropriée des particules.

Grâce à l'utilisation de la technique de coextrusion-soufflage, l'épaisseur de la couche interne peut représenter environ 80 % de l'épaisseur totale du récipient ce qui va dans le sens de l'obtention d'un aspect pierre satisfaisant. La couche externe peut avoir une épaisseur représentant entre 20 % et 50 % de l'épaisseur totale du récipient. Pour obtenir un aspect extérieur pierre naturelle, lisse, la couche externe a de préférence une épaisseur représentant entre 20 % et 30 % de l'épaisseur totale du récipient.

Pour obtenir un aspect extérieur pierre naturelle, à surface rugueuse, la couche externe a de préférence une épaisseur représentant entre 30 % et 50 % de l'épaisseur totale du récipient. Ce résultat peut être intéressant pour obtenir des récipients à paroi en relief.

En effet, plus la couche externe est épaisse, plus sa couleur devient mat et sa surface rugueuse, les particules constituant la charge ne s'orientant plus parallèlement à la paroi interne. La paroi interne ne joue plus le rôle de maintien pour orienter les particules pendant le soufflage du matériau chargé.

En pratique, la couche externe a avantageusement une épaisseur de 0,1 mm à 0,8 mm et de préférence de 0,2 mm à 0,5 mm. En outre, la couche interne a avantageusement une épaisseur de 0,5 mm à 1,3 mm et de préférence de 0,6 mm à 1,0 mm.

Les matières thermoplastiques constituant les couches doivent répondre à certains critères. Elles doivent notamment être compatibles entre elles, et permettre l'incorporation de charge dans l'une d'elles.

La couche interne est réalisée en un matériau compatible avec le contenu afin d'éviter sa dégradation et notamment être inerte vis-à-vis des compositions chimiques préférentiellement utilisées dans les domaines cosmétique et dermatologique. Ce matériau est de préférence un élastomère thermoplastique, un polyéthylène basse densité, un polyéthylène haute densité ou un polypropylène.

Le matériau de la couche externe est avantageusement un matériau apte à protéger le contenu des radiations lumineuses et de l'oxydation. Il est de préférence un matériau thermoplastique de grade soufflage choisi parmi les polypropylènes, les polyéthylènes, les polyesters, les copolymères de propylène tels que les produits commercialisés sous la dénomination HIFAX® ou PROFAX® par la société HIMONT.

Le matériau constituant la couche interne est de préférence tenté et celle du matériau constituant la couche externe de préférence opaque ou translucide.

Lorsque la couche interne est teintée, et la couche externe translucide, on obtient un aspect extérieur de couleur vive et claire.

La ou les charges incorporées dans le matériau formant la couche externe sont de préférence choisies parmi les charges minérales, les charges végétales ou leur mélange.

Parmi les charges minérales, on peut utiliser le carbonate de calcium, le sulfate de calcium, l'oxyde de zinc, le carbonate de zinc, l'oxyde de magnésium, l'hydroxyde ou le silicate de magnésium, tel que par exemple le talc, des silicoaluminates comme le mica ou des microbilles de verre, ou bien des paillettes d'aluminium.

Parmi les charges végétales, on peut utiliser des fibres naturelles telles que les fibres de bois, de cellulose, de coton ou des particules de liège. La plus grande dimension des charges va de préférence de 50 µm à 3 mm, et elle va plus préférentiellement de 80 µm à 1,5 mm.

La ou les charges peuvent être colorées ou non. La coloration peut être obtenue par imprégnation des particules de la charge à l'aide d'un colorant par exemple liquide ou pulvérulent. Le colorant est choisi de façon à résister à la température de fusion du matériau constituant la couche externe. Ce colorant peut être fixé sur la charge et/ou enrobé par une résine thermodurcissable telle qu'une résine urée/formol ou par un polymère obtenu par polymérisation in situ sur la charge, de type acrylique ou vinylique, ou bien fixé selon le procédé décrit dans le document FR-A-2 651 789.

L'introduction d'une charge colorée dans un matériau translucide ou blanc, constituant la couche externe ne modifie pas la couleur du matériau. Il en est de même pour un matériau coloré et une charge incolore.

Par un choix approprié et combiné d'une part de la couleur, de la quantité et de la granulométrie de la charge, et d'autre part de la couleur du matériau formant la couche externe, on peut obtenir, de façon reproductible, une répartition homogène de la charge dans le matériau et lui donner un aspect général, extérieur, pierre naturelle.

La couche externe du récipient selon l'invention peut être obtenue en préparant un mélange de différentes charges prises telles quelles ou sous forme de prémélange, puis en incorporant ces charges au matériau formant la couche externe.

Le matériau constituant la couche interne et celui de la couche externe chargée, sont coextrudés puis soufflés ; la couche interne poussant ensuite les charges de la couche externe et les orientant parallèlement à la paroi du récipient.

La présente invention se rapporte également à un flacon à aspect pierre naturelle consistant en un récipient tel que défini précédemment.

L'invention se rapporte aussi à un procédé de fabrication d'un récipient en matière thermoplastique obtenu par coextrusion d'au moins deux couches, consistant à coextruder une couche interne thermoplastique et une couche externe contenant au moins une charge contenant des particules lamellaires et/ou des particules fibreuses, de granulométrie variable et de plus grande dimension supérieure à 50 µm, puis à souffler les deux couches de façon que les particules de ladite charge dans la couche externe s'orientent parallèlement à la couche interne.

On donne ci-après des exemples de récipient conforme à l'invention.

### Exemple 1 :

On prépare les charges suivantes :

| | |
|---|---|
| 1) - Granulés de polypropylène blanc, de qualité soufflage pour la couche interne | 10 parties |
| 2) - Granulés de polypropylène de couleur beige contenant 5 % de particules de mica enrobé d'un colorant orange granulométrie 200 µm) pour la couche externe | 1 partie |

On coextrude vers 200° C, les granulés 1) et 2) dans une extrudeuse à tête d'équerre et plusieurs vis de chargement pour obtenir une "paraison" bicouche. Après introduction à chaud de la "paraison" dans un moule, on souffle cette dernière pour former le récipient, selon la forme du moule, et orienter les charges de la couche externe parallèlement à la couche interne. Ce soufflage est possible du fait de la présence de la couche interne qui empêche la formation de fissure dans la couche externe chargée, lors du souflage.

Le récipient est obtenu à l'aide d'une machine d'extrusion-soufflage de la marque MAGIC, BEKUM ou KAUTEX équipée d'une tête d'extrusion bicouche de la même marque, et de plusieurs vis de chargement.

La couche interne a une épaisseur de 0,9 mm et la couche externe une épaisseur de 0,5 mm.

Le récipient obtenu a la forme d'un flacon à aspect pierre dont la couleur présente un fond couleur beige chiné ou moucheté de petites taches oranges ressemblant à la pierre de taille. La couche interne du récipient est blanche.

Ce flacon permet de conditionner tout produit utilisé en cosmétique et/ou dermatologie.

### Exemple 2 :

On prépare les charges suivantes :

| | |
|---|---|
| 1) - Granulés de polypropylène beige-marron de qualité soufflage, pour la couche interne | 4 parties |
| 2) - Granulés de polypropylène de qualité soufflage, chargés de 15 % de fibres de bois beige de granulométrie de 160 µm et de 15 % de mica de couleur blanche, rouille et rose clair (30:50:20) dans des granulométries variables comprises entre 280 µm et 1400 µm, | 10 parties |
| - Granulés de polypropylène ocre contenant 40 % de fibres de bois longues, teintées en ocre plus foncé, pour la couche externe | 1 partie |

Pour la coextrusion et le soufflage, on procède de la même façon que dans l'exemple 1, et on obtient, après soufflage, un flacon à aspect pierre dont la couleur présente un fond couleur beige moucheté de petites taches de couleur ocre. La "paraison" obtenue par coextrusion comporte 50 % des granulés 1) et 50 % de granulés 2). La paroi totale du flacon a une épaisseur de 1,5 mm, avec des couches interne et externe ayant environ 0,75 mm d'épaisseur.

Ce flacon est beige à l'intérieur et granité marron à l'extérieur, la teinte interne renforçant la teinte externe, du fait que la paroi externe est translucide.

Ce flacon permet de conditionner tout produit utilisé en cosmétique et/ou dermatologie.

## Revendications

1. Récipient en matière thermoplastique comprenant au moins une couche interne et une couche externe, caractérisé en ce que la couche externe comprend au moins une charge contenant des particules lamellaires et/ou des particules fibreuses orientables, de granulométrie variable et de plus grande dimension supérieure à 50 µm, et en ce que le récipient est obtenu par coextrusion soufflage.

2. Récipient selon la revendication 1 caractérisé en ce que l'épaisseur de la couche externe représente entre 20% et 50% de l'épaisseur totale de la paroi du récipient.

3. Récipient selon la revendication 2 caractérisé en ce que l'épaisseur de la couche externe représente entre 20% et 30% de l'épaisseur totale de la paroi du récipient, ou entre 30% et 50% de l'épaisseur totale de la paroi du récipient.

4. Récipient selon l'une quelconque des revendications 1 à 3, caractérisé en ce que les particules ont une plus grande dimension allant de 50 µm à 3 mm.

5. Récipient selon l'une des revendications précédentes, caractérisé en ce que les particules ont une plus grande dimension allant de 80 µm à 1,5 mm.

6. Récipient selon l'une des revendications précédentes, caractérisé en ce que les particules ont une plus grande dimension allant de 150 µm à 600 µm.

7. Récipient selon l'une des revendications précédentes, caractérisé en ce que la couche externe est réalisée en un matériau apte à préserver le contenu des radiations lumineuses, de l'oxydation, et lui conférer un aspect pierre.

8. Récipient selon l'une des revendications précédentes, caractérisé en ce qu'il contient une composition cosmétique ou dermatologique, la couche interne étant réalisée en un matériau inerte vis-à-vis de ladite composition.

9. Récipient selon l'une des revendications précédentes, caractérisé en ce que la couche interne est réalisée en élastomère thermoplastique ou en polyéthylène basse densité, polyéthylène haute densité ou polypropylène.

10. Récipient selon l'une des revendications précédentes, caractérisé en ce que la couche externe est réalisée en un matériau thermoplastique choisi parmi les polypropylènes, les polyéthylènes, les polyesters.

11. Récipient selon l'une des revendications précédentes, caractérisé en ce que la couche interne a une épaisseur allant de 0,5 mm à 1,3 mm.

12. Récipient selon l'une des revendications précédentes, caractérisé en ce que la couche externe a une épaisseur allant de 0,1 mm à 0,8 mm.

13. Récipient selon l'une des revendications précédentes, caractérisé en ce que la charge est choisie parmi les charges minérales, les charges végétales et leurs mélanges.

14. Récipient selon l'une des revendications précédentes, caractérisé en ce que la charge minérale est choisie parmi le carbonate de calcium, le sulfate de calcium, l'oxyde de zinc, le carbonate de zinc, l'oxyde de magnésium, l'hydroxyde ou un silicate de magnésium, les silicoaluminates, les paillettes d'aluminium.

15. Récipient selon l'une des revendications précédentes, caractérisé en ce que la charge végétale est choisie parmi les fibres de bois, les fibres de coton, les particules de liège.

16. Flacon à aspect pierre naturelle, caractérisé en ce qu'il est consiste en un récipient selon l'une des revendications 1 à 15.

17. Procédé de fabrication d'un récipient en matière thermoplastique obtenu par coextrusion d'au moins deux couches, caractérisé en ce qu'il consiste à coextruder une couche interne thermoplastique et une couche externe contenant au moins une charge contenant des particules lamellaires et/ou des particules fibreuses, orientables, de granulométrie variable et de plus grande dimension supérieure à 50 µm, puis à souffler les deux couches de façon que les particules de ladite charge dans la couche externe s'orientent parallèlement à la couche interne.

## Claims

1. Thermoplastic container which includes at least one internal layer and an external layer, characterized in that the external layer includes at least one filler containing orientable lamellar particles and/or fibrous particles, having a varying particle size and having a largest dimension exceeding 50 µm, and in that the container is obtained by coextrusion blow moulding.

2. Container according to Claim 1, characterized in that the thickness of the external layer represents from between 20% and 50% of the total wall thickness of the container.

3. Container according to Claim 2, characterized in that the thickness of the external layer represents from between 20% and 30% of the total wall thickness of the container, or between 30% and 50% of the total wall thickness of the container.

4. Container according to any one of Claims 1 to 3, characterized in that the largest dimension of the particles ranges from 50 µm to 3 mm.

5. Container according to any one of the preceding claims, characterized in that the largest dimension of the particles ranges from 80 µm to 1.5 mm.

6. Container according to one of the preceding claims, characterized in that the largest dimension of the particles ranges from 150 µm to 600 µm.

7. Container according to one of the preceding claims, characterized in that the external layer is made of a material capable of preserving the contents from light radiation and from oxidation, and making it look like stone.

8. Container according to one of the preceding claims, characterized in that it contains a cosmetic or dermatological composition, the internal layer being made of a material which is inert with respect to the said composition.

9. Container according to one of the preceding claims, characterized in that the internal layer is made of a thermoplastic elastomer or of a low-density polyethylene, a high-density polyethylene or a polypropylene.

10. Container according to one of the preceding claims, characterized in that the external layer is made of a thermoplastic selected from polypropylenes, polyethylenes and polyesters.

11. Container according to one of the preceding claims, characterized in that the internal layer has a thickness ranging from 0.5 mm to 1.3 mm.

12. Container according to one of the preceding claims, characterized in that the external layer has a thickness ranging from 0.1 mm to 0.8 mm.

13. Container according to one of the preceding claims, characterized in that the filler is selected from mineral fillers, plant-based fillers and mixtures thereof.

14. Container according to one of the preceding claims, characterized in that the mineral filler is selected from calcium carbonate, calcium sulphate, zinc oxide, zinc carbonate, magnesium oxide, magnesium hydroxide or a magnesium silicate, aluminosilicates and aluminium flakes.

15. Container according to one of the preceding claims, characterized in that the plant-based filler is selected from wood fibres, cotton fibres and cork particles.

16. Bottle having the appearance of natural stone, characterized in that it consists of a container according to one of Claims 1 to 15.

17. Process for manufacturing a thermoplastic container obtained by the coextrusion of at least two layers, characterized in that it consists in coextruding a thermoplastic internal layer and an external layer which contains at least one filler containing orientable lamellar particles and/or orientable fibrous particles, having a varying particle size and having a largest dimension exceeding 50 µm, and then in blow-moulding the two layers so that the particles of the said filler in the external layer orient so as to be parallel to the internal layer.

## Patentansprüche

1. Behälter aus einem thermoplastischen Material, der mindestens eine innere und eine äußere Schicht umfaßt, dadurch gekennzeichnet, daß die äußere Schicht mindestens einen Füllstoff aufweist, der lamellare Partikel und/oder ausrichtbare faserige Partikel mit variierender Partikelgröße und einer Größe über 50 µm enthält, und daß der Behälter durch Koextrusionsblasformen erhalten wird.

2. Behälter nach Anspruch 1, dadurch gekennzeichnet, daß die Dicke der äußeren Schicht zwischen 20% und 50% der Gesamtdicke der Behälterwand darstellt.

3. Behälter nach Anspruch 2, dadurch gekennzeichnet, daß die Dicke der äußeren Schicht zwischen 20% und 30% der Gesamtdicke der Behälterwand oder zwischen 30% und 50% der Gesamtdicke der Behälterwand darstellt.

4. Behälter nach irgendeinem der Ansprüche 1 bis 3, dadurch gekennzeichnet, daß die Partikel eine Größe von 50 µm bis 3 mm haben.

5. Behälter nach einem der vorhergehenden Ansprüche, dadurch gekennzeichnet, daß die Partikel eine Größe von 80 µm bis 1,5 mm haben.

6. Behälter nach einem der vorhergehenden Ansprüche, dadurch gekennzeichnet, daß die Partikel eine Größe von 150 µm bis 600 µm haben.

7. Behälter nach einem der vorhergehenden Ansprüche, dadurch gekennzeichnet, daß die äußere Schicht aus einem Material ausgebildet ist, das geeignet ist, den Inhalt vor Lichtstrahlen und Oxidation zu schützen und ihr ein Aussehen wie Stein verleiht.

8. Behälter nach einem der vorhergehenden Ansprüche, dadurch gekennzeichnet, daß er eine kosmetische oder dermatologische Mischung aufnimmt, wobei die innere Schicht aus einem gegenüber der Mischung inerten Material ausgebildet ist.

9. Behälter nach einem der vorhergehenden Ansprüche, dadurch gekennzeichnet, daß die innere Schicht aus thermoplastischem Elastomer oder aus Polyethylen niedriger Dichte, Polyethylen hoher Dichte oder Polypropylen ausgebildet ist.

10. Behälter nach einem der vorhergehenden Ansprüche, dadurch gekennzeichnet, daß die äußere Schicht aus einem thermoplastischen Material ausgebildet ist, das aus den Polypropylenen, den Polyethylenen und den Polyestern gewählt ist.

11. Behälter nach einem der vorhergehenden Ansprüche, dadurch gekennzeichnet, daß die innere Schicht eine Dicke von 0,5 mm bis 1,3 mm hat.

12. Behälter nach einem der vorhergehenden Ansprüche, dadurch gekennzeichnet, daß die äußere Schicht eine Dicke von 0,1 mm bis 0,8 mm hat.

13. Behälter nach einem der vorhergehenden Ansprüche, dadurch gekennzeichnet, daß der Füllstoff aus den mineralischen und den pflanzlichen Füllstoffen und deren Mischungen gewählt ist.

14. Behälter nach einem der vorhergehenden Ansprüche, dadurch gekennzeichnet, daß der mineralische Füllstoff aus Calciumcarbonat, Calciumsulfat, Zinkoxid, Zinkcarbonat, Magnesiumoxid, Magnesiumhydroxid oder einem Magnesiumsilikat, den Aluminiumsilikaten oder Aluminiumflitter gewählt ist.

15. Behälter nach einem der vorhergehenden Ansprüche, dadurch gekennzeichnet, daß der pflanzliche Füllstoff aus den Holzfasern, den Baumwollfasern und den Korkpartikeln gewählt ist.

16. Flakon mit einem Aussehen wie natürlicher Stein, dadurch gekennzeichnet, daß er aus einem Behälter nach einem der Ansprüche 1 bis 15 besteht.

17. Verfahren zur Herstellung eines Behälters aus einem thermoplastischen Material, der durch Koextrusion von mindestens zwei Schichten erhalten wird, dadurch gekennzeichnet, daß es darin besteht, eine innere Schicht aus thermoplastischem Material und eine äußere Schicht, die mindestens einen Füllstoff enthält, der lamellare Partikel und/oder ausrichtbare faserige Partikel mit variierender Partikelgröße und einer Größe über 50 µm enthält, zu koextrudieren und dann die beiden Schichten derartig durch Blasformung zu erzeugen, daß sich die Partikel des Füllstoffs in der äußeren Schicht parallel zur inneren Schicht ausrichten.
